# EUROPEAN PATENT SPECIFICATION

(11) **EP 4 207 942 B1**
(45) Date of publication and mention of the grant of the patent: **02.10.2024**
(21) Application number: 22217368.4
(22) Date of filing: 30.12.2022
(51) Int. Cl.: H05B 3/28, A47J 27/00

(54) **HEAT-GENERATING ASSEMBLY, COOKING APPLIANCE, AND COOKING DEVICE**
WÄRMEERZEUGENDE ANORDNUNG, KOCHGERÄT UND KOCHVORRICHTUNG
ENSEMBLE DE GÉNÉRATION DE CHALEUR, APPAREIL DE CUISSON ET DISPOSITIF DE CUISSON

(30) Priority: 31.12.2021 CN 202111668226
(43) Date of publication of application: 05.07.2023
(73) Proprietor: Foshan Shunde Midea Electrical Heating Appliances Manufacturing Co., Ltd., Foshan, Guangdong 528311 (CN)
(72) Inventor: LI, Xinghang, Foshan, 528311 (CN); CAO, Dahua, Foshan, 528311 (CN); WANG, Ting, Foshan, 528311 (CN); WAN, Peng, Foshan, 528311 (CN); ZHOU, Yujie, Foshan, 528311 (CN); LIU, Zhicai, Foshan, 528311 (CN)
(74) Representative: Whitlock, Holly Elizabeth Ann

(56) References cited:
- CN-A- 109 730 529
- DE-A1- 19 623 964
- DE-C1- 10 124 881
- KR-A- 20190 113 101

## Description

### FIELD

The present disclosure relates to the field of household appliance technologies, and more particularly, to a heat-generating assembly, a cooking appliance, and a cooking device.

### BACKGROUND

For a cooking appliance HI, a coil panel is provided on a bottom of the cooking appliance. When the cooking appliance is heated, a heat-generating assembly located at a bottom of a container generates heat through electromagnetic heating. The heat-generating assembly includes two pieces of glass that are arranged opposite to each other and a heat-generating layer sandwiched between the two pieces of glass. A plane where an edge of an existing heat-generating layer is located is perpendicular to an extending direction of the heat-generating layer. An air gap is formed between the edge of the heat-generating layer and an edge of each piece of glass. When the edge of the glass of the heat-generating assembly is adhered to a container body, a negative pressure or one atmospheric pressure is present inside the air gap, and there is air in the air gap. In a heat-generating process of the heat-generating assembly, the air in the gap expands to a certain extent. As a result, predetermined pressures are generated on an upper part, a lower part, a left part, and a right part where the air gap is located. The existing glass is subject to lower tensile stress. When the tensile stress to which the glass is subject exceeds a critical value, the glass may crack, which may result in failure of the cooking appliance. Document DE 101 24 881 C1 discloses a heat generating assembly according to the prior art.

### SUMMARY

The present disclosure aims to improve at least one of the above-mentioned technical problems to some extent.

To this end, the present disclosure provides a heat-generating assembly. The heat-generating assembly includes a first inorganic layer, a heat-generating layer, and a second inorganic layer that are stacked sequentially. The heat-generating layer includes a first side portion, a second side portion, and two end portions opposite to each other. The first side portion is connected to a surface of the first inorganic layer. The second side portion is connected to a surface of the second inorganic layer. Each of the two end portions is connected to the first inorganic layer and the second inorganic layer and has a recess. The recess extends towards an interior of the heat-generating layer. Therefore, an air gap is formed between an edge of each of the first inorganic layer and the second inorganic layer and the corresponding end portion of the heat-generating layer. When the heat-generating assembly is adhered to a container body, air is present within the air gap. The end portion having the recess can effectively increase a stress area, and a great amount of air is present within the air gap, and thus forces exerted on interfaces between the first inorganic layer, the second inorganic layer, and the heat-generating assembly and the container body is relatively small. As a result, service life of the heat-generating assembly can be effectively improved. Moreover, a magnetic field generated by a coil panel during electromagnetic heating is weaker at an edge of the heat-generating layer, and thus heat generated at the edge of the heat-generating layer is very small. In addition, since the recess is formed at the end portion of the heat-generating layer has the recess, fewer heating materials is used at the edge of the heat-generating layer, and thus the material is saved.

According to some embodiments of the present disclosure, the recess extends in an extending direction of the first inorganic layer or the second inorganic layer.

According to some embodiments of the present disclosure, a part of the recess close to the interior of the heat-generating layer has a smaller width than a part of the recess away from the interior of the heat-generating layer. The width of the recess is a dimension of the recess in a thickness direction of the heat-generating layer.

According to some embodiments of the present disclosure, the recess at least partially has a constant width. The width of the recess is a dimension of the recess in a thickness direction of the heat-generating layer.

According to some embodiments of the present disclosure, each of the two end portions has a wall portion.

According to some embodiments of the present disclosure, the wall portion includes a first sub-wall portion and a second sub-wall portion connected to the first sub-wall portion. The first sub-wall portion is connected to the first inorganic layer, and the second sub-wall portion is connected to the second inorganic layer. The recess is formed by the first sub-wall portion and the second sub-wall portion.

According to some embodiments of the present disclosure, the heat-generating assembly satisfies at least one of the following conditions: an angle formed between the first sub-wall portion and the second sub-wall portion ranges from 10 degrees to 80 degrees; a distance by which the recess extends in an extending direction of the first inorganic layer is greater than 50 µm; and the heat-generating layer has a thickness ranging from 10 µm to 30 µm.

According to some embodiments of the present disclosure, the wall portion includes a first sub-wall portion, a second sub-wall portion, and a third sub-wall portion. The first sub-wall portion is connected to the first inorganic layer. The second sub-wall portion is connected to the second inorganic layer. The third sub-wall portion is connected to the first sub-wall portion and the second sub-wall portion, respectively. The recess is formed by the first sub-wall portion, the third sub-wall portion, and the second sub-wall portion.

According to some embodiments of the present disclosure, an angle formed between a plane where the wall portion is located and the first inorganic layer is greater or smaller than 90 degrees, and the recess is formed by the wall portion and one of the first inorganic layer and the second inorganic layer.

According to some embodiments of the present disclosure, the heat-generating layer is embedded in the first inorganic layer and the second inorganic layer. A contact interface between the heat-generating layer and the first inorganic layer and a contact interface between the heat-generating layer and the second inorganic layer each have a concave-convex structure.

According to some embodiments of the present disclosure, the heat-generating layer is made of a material including metal particles and an inorganic oxide matrix.

According to some embodiments of the present disclosure, the metal particles satisfy at least one of the following conditions: the metal particles are disposed close to the recess; and the metal particles are disposed away from the first inorganic layer and the second inorganic layer.

According to some embodiments of the present disclosure, a plurality of metal particles is aggregated to form particle aggregates distributed at intervals in an extending direction of the end portion.

According to some embodiments of the present disclosure, the particle aggregates are of an irregular shape. At least a part of the particle aggregates has a long axis extending in an extending direction of the first inorganic layer, and a short axis extending in a thickness direction of the heat-generating layer.

According to some embodiments of the present disclosure, the particle aggregates are arranged away from the first inorganic layer and the second inorganic layer. A spacing is formed between the particle aggregates and each of the first inorganic layer and the second inorganic layer, and the inorganic oxide matrix is distributed in the spacing.

According to some embodiments of the present disclosure, a plurality of particle aggregates is arranged at intervals in a thickness direction of the heat-generating layer, and a spacing is formed between adjacent particle aggregates, and the inorganic oxide matrix being distributed in the spacing.

According to some embodiments of the present disclosure, a bottom of the recess is located close to the inorganic oxide matrix. The bottom of the recess is a position where a distance between the end portion and the interior of the heat-generating layer is minimal.

The present disclosure further provided a cooking appliance. The cooking appliance includes a container body and a container base connected to the container body to define an accommodation space. The container base includes the heat-generating assembly as described above. Therefore, the cooking appliance has all the features and advantageous of the heat-generating assembly as described above, and the description thereof in detail will be omitted herein.

According to some embodiments of the present disclosure, the cooking appliance is a kettle, an electromagnetic microcrystal pot, an electric rice cooker, or a stewpot.

The present disclosure further provided a cooking device. The cooking device includes the cooking appliance as described above. Therefore, the cooking device has all the features and advantageous of the cooking appliance as described above, and the description thereof in detail will be omitted herein.

### BRIEF DESCRIPTION OF THE DRAWINGS

FIG. 1 is a schematic structural view showing an existing cooking appliance;
FIG. 2 is a schematic view showing forces applied on each part of a heat-generating assembly during air expansion when an existing heat-generating assembly operates;
FIG. 3 is a schematic structural view showing a heat-generating assembly according to an embodiment of the present disclosure;
FIG. 4 is a schematic view showing forces applied on each part of a heat-generating assembly during air expansion when an existing heat-generating assembly works according to an embodiment of the present disclosure;
FIG. 5 is a schematic structural view showing a heat-generating assembly according to another embodiment of the present disclosure;
FIG. 6 is a scanning electron microscope image showing an end portion of a heat-generating layer according to an embodiment of the present disclosure;
FIG. 7 is a scanning electron microscope image showing an end portion of a heat-generating layer according to another embodiment of the present disclosure;
FIG. 8 is a schematic structural view showing a heat-generating assembly according to another embodiment of the present disclosure;
FIG. 9 is a schematic structural view showing a heat-generating assembly according to another embodiment of the present disclosure;
FIG. 10 is a schematic structural view showing a heat-generating assembly according to another embodiment of the present disclosure;
FIG. 11 is a schematic structural view showing a heat-generating layer according to an embodiment of the present disclosure; and
FIG. 12 is a schematic structural view showing a heat-generating layer according to another embodiment of the present disclosure.

### Reference numerals:

100-first inorganic layer; 200-heat-generating layer; A-first side portion; B-second side portion; C-end portion; D-wall portion; D 1-first sub-wall portion; D2-second sub-wall portion; D3-third sub-wall portion; E-recess; E1- bottom of the recess; 210-particle aggregate; 220-inorganic oxide matrix; 300-second inorganic layer.

### DETAILED DESCRIPTION

The solutions of the present disclosure will be explained below with reference to the embodiments. A person skilled in the art will understand that the embodiments described below are merely used to illustrate the present disclosure, rather than being construed as limitation on the scope of the present disclosure. The specific techniques or conditions not indicated in the embodiments are implemented based on the techniques or conditions described in the related art or based on product specifications. Adopted reagents or instruments, where a manufacturer is not specified, are all conventional products commercially available.

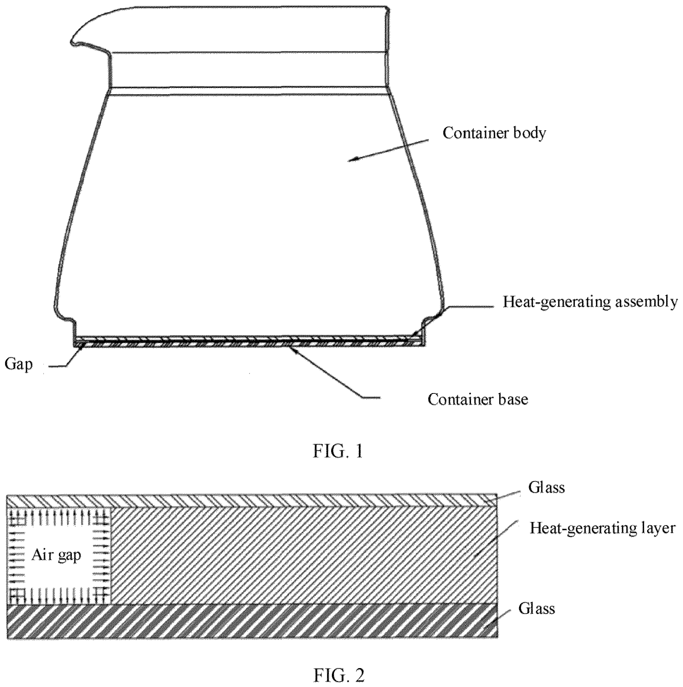

For a cooking appliance IH, a coil panel is provided on a bottom of the cooking appliance. Referring to FIG. 1, the inventor has found that when the cooking appliance IH is heated, a heat-generating assembly located at a container base generates heat through electromagnetic heating. The heat-generating assembly includes two pieces of glass that are arranged opposite to each other and a heat-generating layer sandwiched between the two pieces of glass. Referring to FIG. 2, a plane where edges of an existing heat-generating layer are located is perpendicular to an extending direction of the heat-generating layer. An air gap is formed between the edges of the heat-generating layer and an edge of each piece of glass. When the edge of the glass of the heat-generating assembly is adhered to a container body, a negative pressure or one atmospheric pressure is present within the air gap, and there is air in the air gap. In a heat-generating process of the heat-generating assembly, the air in the gap expands to a certain extent. As a result, predetermined pressures are generated on an upper part, a lower part, a left part, and a right part where the air gap is located. The existing glass is subject to lower tensile stress. When the tensile stress to which the glass is subject exceeds a critical value, the glass may crack, which may result in failure of the cooking appliance.

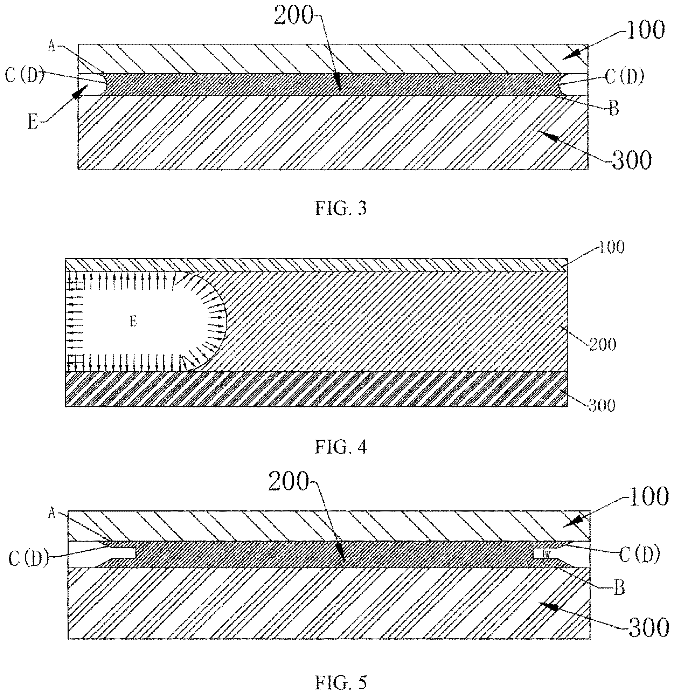

To eliminate the above-mentioned technical problems, the present disclosure provides a heat-generating assembly. Referring to FIG. 3, the heat-generating assembly includes a first inorganic layer 100, a heat-generating layer 200, and a second inorganic layer 300 that are sequentially stacked. The heat-generating layer 200 has a first side portion A, and a second side portion B opposite to the first side portion A. Also, the heat-generating layer 200 further has two end portions C. The two end portions C are disposed on two opposite sides of the heat-generating layer 200. A surface of the first inorganic layer 100 is connected to the first side portion A, and a surface of the second inorganic layer 300 is connected to the second side portion B. Each of the end portions C is connected to the second inorganic layer 300 and the first inorganic layer 100, and has a recess E. The recess E extends towards an interior of the heat-generating layer 200. Referring to FIG. 4, an air gap is formed between an edge of each of the first inorganic layer 100 and the second inorganic layer 300 and the corresponding end portion C of the heat-generating layer 200. When the heat-generating assembly is adhered to a container body, air is present within the air gap. With such a structure of the present disclosure, it is possible to effectively increase a stress area, and a greater air pressure is present within the air gap. Thus, forces exerted on interfaces between the second inorganic layer, the first inorganic layer, and the heat-generating assembly and the container body are relatively small, and safety and service life of the heat-generating assembly can be effectively improved. Moreover, a magnetic field generated by the coil panel during electromagnetic heating is weaker at the edge of the heat-generating layer 200, and thus heat generated at the edge of the heat-generating layer 200 is very small. In addition, the end portion C of the heat-generating layer 200 has the recess E. As a result, during the formation of the heat-generating layer 200, fewer heating materials may be used at the edge of the heat-generating layer to save the material.

It should be noted that, since adhesive strength inside the heat-generating layer 200 is very high, in the heat-generating process of the heat-generating assembly, an influence caused by the stress in the heat-generating layer 200 is negligible. The end portion C of the heat-generating layer 200 of the present disclosure has the recess E, which effectively increases the stress area, and makes the forces exerted on the interfaces between the second inorganic layer 300, the first inorganic layer 100, and the heat-generating assembly and the container body relatively small. Therefore, a risk of fracture of the heat-generating assembly can be further reduced, and safety and service life of the heat-generating assembly can be improved.

According to some embodiments of the present disclosure, the second inorganic layer 300 may be located close to the coil panel at the bottom of the cooking appliance. The first inorganic layer 100 may be located close to an object to be heated. A thickness of the first inorganic layer 100 is smaller than a thickness of the second inorganic layer 300. In this case, since the first inorganic layer 100 has the smaller thickness, a distance by which heat is transferred to the first inorganic layer 100 may be shortened, which enables the heat to be transferred to the object to be heated more quickly. Thus, heat transfer rate and heat utilization rate can be improved. The second inorganic layer 300 has a larger thickness and relatively large mechanical strength, which can avoid problems such as fracture of the second inorganic layer 300 during the using. However, the thickness of the first inorganic layer 100 and the thickness of the second inorganic layer 300 are not limited to this situation described above, and may be adjusted by a person skilled in the art as desired. In some embodiments, the thickness of the first inorganic layer 100 may be equal to or greater than the thickness of the second inorganic layer 300.

According to some embodiments of the present disclosure, both the first inorganic layer 100 and the second inorganic layer 300 may be made of glass. In some embodiments, the first inorganic layer 100 and the second inorganic layer 300 may be made of same or different materials, which may be independently selected from high borosilicate glass, microcrystalline glass, and alkali-free glass. It should be noted that the microcrystalline glass, the high borosilicate glass, and the alkali-free glass have good high temperature resistance. When the second inorganic layer 300 and the first inorganic layer 100 are made of these materials, it is possible to effectively improve stability and the safety of the heat-generating assembly during the using.

According to some embodiments of the present disclosure, the second inorganic layer 300 has an equal area to the first inorganic layer 100. An area of an orthographic projection of the heat-generating layer 200 on the first inorganic layer 100 may be smaller than the area of the first inorganic layer 100. In this case, a minimum distance between one of the end portions C of the heat-generating layer 200 and a corresponding side surface of the first inorganic layer 100 may range from 5 µm to 20 µm. For example, the minimum distance may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, and 20 µm. The side surface of the first inorganic layer 100 is a surface of the first inorganic layer 100 perpendicular to an extending direction thereof. When the minimum distance between the end portion C of the heat-generating layer 200 and the side surface of the first inorganic layer 100 ranges from 5 µm to 20 µm, it is possible to effectively prevent the heat-generating layer from being melted due to a high temperature when the container base containing the heat-generating assembly is welded to the container body, which further improves the safety and service life of the heat-generating assembly. In addition, too large or too small distance would result in poor electromagnetic heating effect. In some embodiments, when the container base containing the heat-generating assembly is welded to the container body, the edge of the heat-generating assembly connected to the container body has a high temperature, and the temperature of the edge during the welding is greater than 900°C. When the distance is too small, a distance between the heat-generating layer 200 and the edge is too small, which results in a too high temperature of the heat-generating layer 200, which may melt the heat-generating layer 200. As a result, an appearance and the electromagnetic heating effect are affected. When the distance is too large, an area of the heat-generating layer 200 in the heat-generating assembly is relatively small, resulting in poor overall electromagnetic heating effect.

According to the embodiments of the present disclosure, the recess E extends in an extending direction of the second inorganic layer 100 or the first inorganic layer 100. That is, the recess E extends in a direction from an exterior of the heat-generating layer 200 towards the interior of the heat-generating layer 200.

According to the embodiments of the present disclosure, a part of the recess E close to the interior of the heat-generating layer 200 has a smaller width than a part of the recess E away from the interior of the heat-generating layer 200. That is, a gap formed by the recess E gradually increases in the direction from the interior of the heat-generating layer 200 towards the exterior of the heat-generating layer 200. It should be noted that the width of the recess E refers to a dimension of the recess E in a thickness direction of the heat-generating layer 200. In this case, the gap formed by the recess E gradually increases in the direction away from the interior of the heat-generating layer 200, and finally an air gap of a same size to the thickness of the heat-generating layer 200 is formed. When the heat-generating assembly is in operation, a stress area of air within the air gap may be further increased, and a greater pressure is present within the recess E, which further reduces impact forces of the pressure from the air on the interfaces between the second inorganic layer 300, the first inorganic layer 100, and the heating assembly and the container body. As a result, the safety and service life of the heat-generating assembly can be further improved.

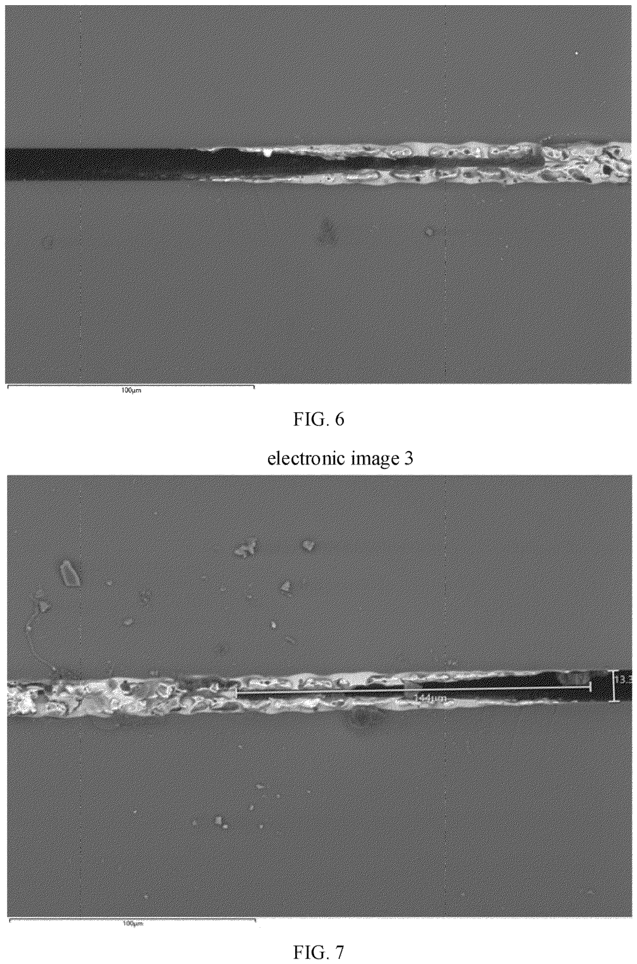

According to the embodiments of the present disclosure, referring to FIG. 5, FIG. 6, and FIG. 7, the recess E at least partially has a constant width. The width of the recess E refers to a dimension (denoted by W in FIG. 5) of the recess E in the thickness direction of the heat-generating layer 200. That is, in the present disclosure, a specific shape of the end portion C and a specific shape of the recess E are not limited, as long as the formed recess can increase the stress area. The specific shape of the end portion C and the specific shape of the recess E may be adjusted by a person skilled in the art as desired.

In addition, it should be noted that the constant width means that the width is constant within a predetermined error range, rather than being absolute constant. In addition, a specific region of the end portion in which the recesses having the constant width is located is not limited in the present disclosure, and may be flexibly adjusted by a person skilled in the art based on the usage requirements.

According to the embodiments of the present disclosure, each of the end portions C includes a wall portion D.

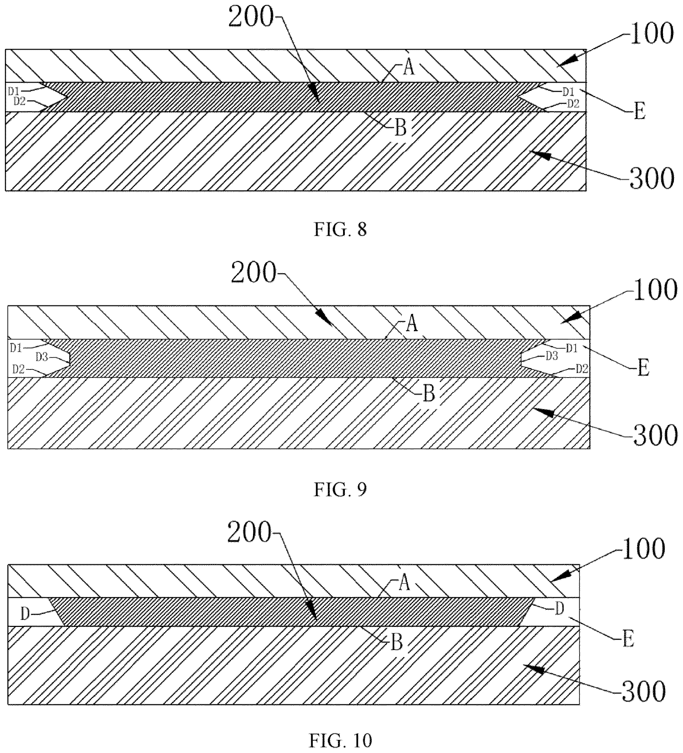

According to the embodiments of the present disclosure, referring to FIG. 8, the wall portion D includes a first sub-wall portion D1 and a second sub-wall portion D2. The second sub-wall portion D2 and the first inorganic layer 100 are connected to each other by the first sub-wall portion D1. The second inorganic layer 300 and the first sub-wall portion D1 are connected by the second sub-wall portion D2. The second sub-wall portion D2 is connected to the first sub-wall portion D1. The recess E is formed by the second sub-wall portion D2 and the first sub-wall portion D1. In this case, the end portion C has a morphology that is spaced from each other. In this case, the recess E is formed by the second sub-wall portion D2 and the first sub-wall portion D1, and extends towards the interior of the heat-generating assembly. This structure can effectively increase the stress area, and thus further reduces the forces exerted on the interface between the second inorganic layer 300, the first inorganic layer 100, and the heat-generating assembly and the container body. As a result, the risk of the fracture of the heat-generating assembly can be reduced, and the safety and service life of the heat-generating assembly can be effectively improved.

A connection position between the second sub-wall portion D2 and the first sub-wall portion D1 is not limited in the present disclosure. For example, the second sub-wall portion D2 and the first sub-wall portion D1 may be connected in the middle of the heat-generating layer 200. That is, in the thickness direction of the heat-generating layer 200, a distance from the connection between the second sub-wall portion D2 and the first sub-wall portion D1 to the second inorganic layer 300 may be equal to a distance from the connection between the second sub-wall portion D2 and the first sub-wall portion D1 to the first inorganic layer 100. However, the present disclosure is not limited in this regard. The connection between the second sub-wall portion D2 and the first sub-wall portion D1 may also be located at other positions, as long as the formed recess facing towards the interior of the heat-generating layer 200 can increase the stress area when the second sub-wall portion D2 is connected to the first sub-wall portion D1. It is possible to further reduce the forces exerted on the interfaces between the second inorganic layer 300, the first inorganic layer 100, and the heat-generating assembly and the container body, which can reduce the risk of the fracture of the heat-generating assembly.

According to the embodiments of the present disclosure, an angle formed by the second sub-wall portion D2 and the first sub-wall portion D1 may range from 10 degrees to 80 degrees. For example, the angle may be 10 degrees, 15 degrees, 20 degrees, 25 degrees, 30 degrees, 35 degrees, 40 degrees, 45 degrees, 55 degrees, 60 degrees, 65 degrees, 70 degrees, 75 degrees, or 80 degrees. When the angle formed by the second sub-wall portion D2 and the first sub-wall portion D1 is too small, a distance by which the recess E extends towards the interior of the heat-generating assembly is accordingly too large, and a part of the heat-generating layer 200 at an orthographic projection part of the recess E on the first inorganic layer 100 has a relatively small material amount. That is, compared with a material amount of the heat-generating layer at other positions, the material amount of the heat-generating layer 200 at the recess is relatively small, which may result in non-uniform heat of the heat-generating assembly. When the angle formed by the second sub-wall portion D2 and the first sub-wall portion D1 is too large, the distance by which recess E extends towards the interior of the heat-generating assembly is accordingly too small to effectively increase the stress area. In this case, the forces exerted on the interfaces between the second inorganic layer 300, the first inorganic layer 100, and the heat-generating assembly and the container body cannot be significantly reduced, and the heat-generating assembly has high fracture risk.

According to some embodiments of the present disclosure, a dimension of the recess E in the extending direction of the first inorganic layer 100 is greater than 50 µm.For example, the dimension may be 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 144 µm, 145 µm, 150 µm, 155 µm, 160 µm, and the like. When the distance is too small, the distance by which the recess E extends towards the interior of the heat-generating assembly is too small to effectively increase the stress area. In this case, the forces exerted on the interfaces between the second inorganic layer 300, the first inorganic layer 100, and the heat-generating assembly and the container body cannot be significantly reduced, and the heat-generating assembly has high fracture risk.

According to some embodiments of the present disclosure, the thickness of the heat-generating layer 200 may range from 10 µm to 30 µm. For example, the thickness of the heat-generating layer 200 may be 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, and 30 µm. The heat generated by the heat-generating layer 200 of the thickness in such a range described above is appropriate, and the heat-generating layer 200 has a smaller thickness, which does not significantly increase a thickness of the bottom of the container of the cooking appliance. Further, the container base of the cooking appliance with the smaller thickness can effectively improve market competitiveness of the cooking appliance.

According to the embodiments of the present disclosure, referring to FIG. 9, the wall portion D includes a first sub-wall portion D1, a second sub-wall portion D2, and a third sub-wall portion D3. The first inorganic layer 100 and the third sub-wall portion D3 are connected to each other by the first sub-wall portion D 1. The second sub-wall portion D2 and the first sub-wall portion D1 are connected to each other by the third sub-wall portion D3. The third sub-wall portion D3 and the second inorganic layer 300 are connected to each other by the second sub-wall portion D2. The third sub-wall portion D3, the second sub-wall portion D2, and the first sub-wall portion D1 are connected to each other in the above manner to form the recess E. That is, a specific formation manner of the recess E is not limited in the present disclosure. The wall portion may be formed by two or three sub-wall portions. As understood by a person skilled in the art, the wall portion may also be formed by more than four sub-wall portions.

According to the embodiments of the present disclosure, referring to FIG. 10, an angle formed between a plane where the wall portion D is located and the first inorganic layer 100 is greater or smaller than 90 degrees. For example, the wall portion D may be an inclined plane, as long as the angle formed between the first inorganic layer 100 and the plane where the wall portion D is not 90 degrees. The recess E may be formed by the wall portion D and one of the second inorganic layer 300 and the first inorganic layer 100. In this case, the end portion C may also be form as the recess facing towards the interior of the heat-generating layer 200, which effectively increases the stress area. As a result, the forces exerted on the interfaces between the second inorganic layer 300, the first inorganic layer 100, and the heat-generating assembly and the container body can be further reduced to reduce the risk of the fracture of the heat-generating assembly and improve the safety and service life of the heat-generating assembly.

According to the embodiments of the present disclosure, the heat-generating layer 200 is embedded in the first inorganic layer 100, and a contact interface between the first inorganic layer 100 and the heat-generating layer 200 has a concave-convex structure. Meanwhile, the heat-generating layer 200 is embedded in the second inorganic layer 300, and a contact interface between the second inorganic layer 300 and the heat-generating layer 200 also has a concave-convex structure. That is, a contact part of the heat-generating layer 200 with the second inorganic layer 300 and a contact part of the heat-generating layer 200 with the first inorganic layer 100 each have interfaces which are not flat, which can provide better adhesion between the heat-generating layer 200 and the second inorganic layer 300 and better adhesion between the heat-generating layer 200 and the first inorganic layer 100. Meanwhile, uniformity of the heat transferred to the second inorganic layer 300 and the first inorganic layer 100 can be further improved.

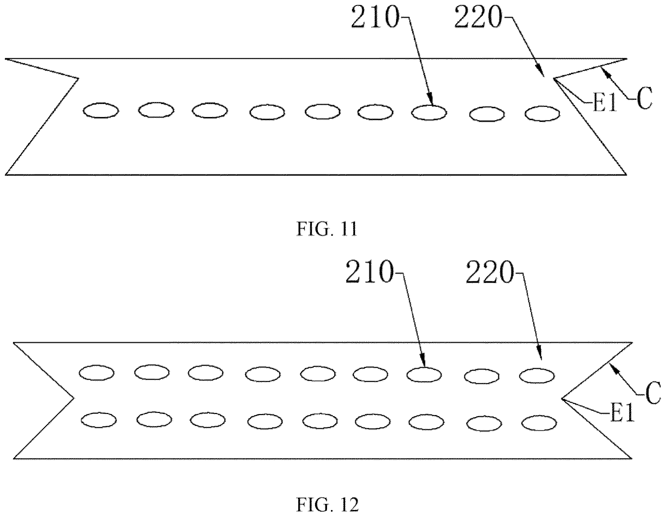

According to the embodiments of the present disclosure, referring to FIG. 11 and FIG. 12, the heat-generating layer 200 is made of a material including an inorganic oxide matrix 220 and metal particles (not shown). Heat in the heat-generating layer 200 may be quickly transferred through the metal particles, which can improve heating efficiency and heating uniformity of the heat-generating layer 200 to reduce aggregation of the heat at a side of the heat-generating layer 200 and improve the stability of the heat-generating assembly. The inorganic oxide matrix 220 may disperse thermal stress generated by the metal particles during the heating to reduce risks of cracking and inter-layer peeling of the heat-generating layer 200 and further improve the safety and service life of the heat-generating assembly.

According to some embodiments of the present disclosure, the inorganic oxide matrix 220 includes at least one of silicon oxide, bismuth oxide, magnesium oxide, or potassium oxide. These materials have characteristics of good dispersion for the thermal stress, and advantages such as low price, which can further reduce production costs of the heat-generating assembly.

The metal particles are made of a material including at least one of silver, aluminum, or copper. These materials have good conductivity, and are weak magnetic metal materials. Further, these materials have a relative permeability smaller than 1, and can induce the magnetic field to generate a current and an eddy current for heating. Thus, it is beneficial to improve the heating efficiency of the heat-generating layer.

According to the embodiments of the present disclosure, the metal particles are arranged close to the recess E. In this case, the thermal stress generated by the end portions C when the heat-generating assembly operates can be further reduced to reduce the risk of cracking of the end portion C and further improve the safety and service life of the heat-generating assembly.

According to some embodiments of the present disclosure, the metal particles are disposed away from the second inorganic layer 300 and the first inorganic layer 100. That is, there is a predetermined distance between the metal particles and the second inorganic layer 300, and there is a predetermined distance between the metal particles and the first inorganic layer 100. Therefore, it is possible to avoid direct contact between the metal particles and the second inorganic layer 300 and direct contact between the metal particles and the first inorganic layer 100, which further reduces the risk of cracking of the second inorganic layer 300 and the first inorganic layer 100 during the heating to improve the safety and service life of the heat-generating assembly.

According to the embodiments of the present disclosure, a plurality of metal particles is aggregated to form a particle aggregate 210. In this case, the heat in the heat-generating layer 200 can be quickly transferred along the metal particle aggregate 210, which can improve the heating efficiency and the heating uniformity of the heat-generating layer 200, prevent the heat from aggregating at a side of the heat-generating layer 200, and improve the stability of the heat-generating assembly. In addition, the inorganic oxide matrix 220 is present between the plurality of particle aggregates 210, and can disperse the thermal stress generated by the particle aggregates 210 during the heating to reduce the risks of cracking and inter-layer peeling of the heat-generating layer 200 and further improve the safety and service life of the heat-generating assembly.

According to some embodiments of the present disclosure, the particle aggregate 210 is distributed at intervals in an extending direction of the end portion C. In this case, it is possible to further improve uniformity of heat transfer of the end portions of the heat-generating layer, reduce the risk of cracking of the end portion C, and further improve the safety and service life of the heat-generating assembly.

According to the embodiments of the present disclosure, the particle aggregate 210 may be of an irregular shape. At least part of the particle aggregate 210 has a long axis extending in the extending direction of the first inorganic layer 100, and a short axis extending in the thickness direction of the heat-generating layer 200. In this case, it is possible to further improve the uniformity of heat transfer, reduce accumulation of the heat in the heat-generating layer 200, and reduce the thermal stress generated by the heat-generating layer 200 during the heating to further reduce the risks of cracking and inter-layer peeling of the heat-generating layer 200 and further improve the safety and service life of the heat-generating assembly.

It should be noted herein that the long axis refers to a longest line segment formed by connecting two points on the particle aggregate 210, and the long axis direction is an extending direction along the longest line segment. The short axis refers to a shortest line segment formed by connecting two points on the particle aggregate 210, and the short axis direction is an extending direction along the shortest line segment.

According to some embodiments of the present disclosure, the particle aggregate 210 may be of an ellipsoidal shape, but is not limited thereto, and the particle aggregate 210 may also be of other shapes.

According to some embodiments of the present disclosure, at an initial position of the recess E, the long axis of the particle aggregate 210 extends in the extending direction of the first inorganic layer 100, and the short axis of the particle aggregate 210 extends in the thickness direction of the heat-generating layer 100. In this case, the long axis of the particle aggregate 210 is close to the first inorganic layer 100, which can increase a heat transfer area between the particle aggregate 210 and the first inorganic layer 100. As a result, the heat utilization rate and the uniformity of heat transfer of the heat-generating layer 200 can be further improved. Similarly, when the long axis of the particle aggregate 210 is close to the second inorganic layer 300, it is possible to increase a heat transfer area between the particle aggregate 210 and the second inorganic layer 300. As a result, the heat utilization rate and the uniformity of heat transfer of the heat-generating layer 200 can be further improved, and the accumulation of heat in the heat-generating layer 200 can be reduced. Further, the thermal stress generated by the end portions during the heating is reduced, the risk of cracking of the end portions is further reduced, and the safety and service life of the heat-generating assembly are further improved.

According to the embodiments of the present disclosure, referring to FIG. 11, the particle aggregate 210 is arranged away from the second inorganic layer 300 and the first inorganic layer 100. As a result, a spacing is formed between the particle aggregate 210 and each of the first inorganic layer 100 and the second inorganic layer 300. A plurality of inorganic oxide matrixes 220 is distributed in spacing. In this case, the particle aggregate 210 is spaced apart from the second inorganic layer 300 and the first inorganic layer 100 by the inorganic oxide matrixes 220, which can improve the uniformity of heat transferred to the second inorganic layer 300 and the first inorganic layer 100. As a result, a risk of excessive noise due to too high heating power can be reduced. Further, the risk of cracking at the interfaces between the second inorganic layer 300, the first inorganic layer 100, and the heat-generating assembly and the container body can be reduced. Meanwhile, it is possible to prevent the heat from being concentrated in the middle of the heat-generating layer 200 to cause peeling of the heat-generating layer 200. Thus, the uniformity of heat transfer is improved, and the safety and service life of the heat-generating assembly are further improved.

According to the embodiments of the present disclosure, referring to FIG. 12, in the thickness direction of the heat-generating layer 200, a plurality of particle aggregates 210 is arranged at intervals. As a result, a spacing is formed between adjacent particle aggregates 210. The inorganic oxide matrix 220 is distributed in the spacing. In this case, it is possible to prevent the inter-layer peeling of the heat-generating layer 200 due to heat aggregation, and improve the uniformity of heat transfer and the safety and service life of the heat-generating assembly.

According to the embodiments of the present disclosure, referring to FIG. 11 and FIG. 12, a bottom E1 of the recess is located close to the inorganic oxide matrix 220. The bottom E1 of the recess is a position where a distance between the end portion C and the interior of the heat-generating layer 200 is minimum. In this case, it is possible to reduce the thermal stress generated by the bottom E1 of the recess during the heating and the risks of the cracking and the inter-layer peeling of the end portion C, and improve the safety and service life of the heat-generating assembly.

A person skilled in the art may select a corresponding preparation method according to a structure of the heat-generating assembly. For example, when the end portion C of the heat-generating layer 200 has the second sub-wall portion D2 and the first sub-wall portion D1 and the angle is formed between the second sub-wall portion D2 and the first sub-wall portion D1, i.e., when the heat-generating assembly shown in FIG. 8 is prepared, the heat-generating assembly may be manufactured by a method described below.

The method includes: providing a first inorganic layer 100, and coating a surface of the first inorganic layer 100 with a heat-generating layer material to form a first layered structure; providing a second inorganic layer 300, and coating a surface of the second inorganic layer 300 with the heat-generating layer material to form a second layered structure; processing an edge of the first layered structure to be formed as a first side wall; processing an edge of the second layered structure to be formed as a second side wall; attaching the first inorganic layer 100 of a first layered structure with the second inorganic layer 300 of the second layered structure in such a manner that the second layered structure and the first layered structure are located between the second inorganic layer 300 and the first inorganic layer 100; connecting the first side wall to the second side wall; and performing a drying processing on a heat-generating layer 200. Each of end portions of the heat-generating layer 200 has a second sub-wall portion and a first sub-wall portion, and an angle is formed between the first sub-wall portion and the second sub-wall portion.

The present disclosure further provides a cooking appliance. The cooking appliance includes a container body and a container base. The container base is connected to the container body to define an accommodation space. The container base includes the heat-generating assembly as described above. In this case, the cooking appliance has all the features and advantages of the heat-generating assembly as described above, and the description thereof in detail will be omitted herein. In general, when the heat-generating assembly of the cooking appliance is in operation, the forces exerted on the interfaces between the first inorganic layer, the second inorganic layer, and the heat-generating assembly and the container body are relatively small, which can effectively improve the safety and service life of the heat-generating assembly.

According to some embodiments of the present disclosure, a connection between the container body and the container base may be implemented by means of welding. The container body and the container base welded together may form the accommodation space for accommodating food or water.

A person skilled in the art can understand that the cooking appliance may further include a heating base. The heating base includes a functional module configured to allow the heat-generating assembly to generate heat. According to one embodiment of the present disclosure, the functional module may be an electromagnetic induction coil. The electromagnetic induction coil may generate a magnetic field to enable the heat-generating layer to generate a vortex to further generate heat. As a result, water, food, etc. within the accommodation space can be heated.

According to some embodiments of the present disclosure, the cooking appliance includes, but is not limited to, a stewpot, an electric rice cooker, an electromagnetic microcrystal pot, and a kettle.

The present disclosure further provides a cooking device. The cooking device includes the cooking appliance as described above. In this case, the cooking device has all the features and advantages of the cooking appliance described above, and the description thereof in detail will be omitted herein. In general, the cooking device has advantages such as high heating efficiency, high safety, and long service life.

It should be noted that, in this specification, the terms "first" and "second" are only used for descriptive purposes, and cannot be understood as indicating or implying relative importance or implicitly indicating the number of indicated technical features. The orientation or position relationship indicated by the terms such as "upper", "lower", etc., is based on the orientation or position relationship shown in the accompanying drawings, and is merely for the convenience of describing the present disclosure and simplifying the description, rather than demanding that the present disclosure must be constructed and operated in a specific orientation, and therefore cannot be understood as a limitation to the present disclosure.

In the description of this specification, descriptions with reference to the terms "an embodiment", "some specific embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. Those skilled in the art can combine the different embodiments or examples and the features of the different embodiments or examples described in this specification without contradicting each other.

Although the embodiments of the present disclosure have been shown and described above, it should be understood that the above-mentioned embodiments are exemplary and should not be construed as limiting the present disclosure. Changes, modifications, substitutions and alternations may be made to the above embodiments by those of ordinary skill in the art within the scope of the present disclosure.

## Claims

1. A heat-generating assembly, comprising a first inorganic layer (100), a heat-generating layer (200), and a second inorganic layer (300) that are stacked sequentially, the heat-generating layer (200) comprising:
a first side portion (A) connected to a surface of the first inorganic layer (100);
a second side portion (B) connected to a surface of the second inorganic layer (300); and
two end portions (C) opposite to each other, each of the two end portions (C) being connected to the first inorganic layer (100) and the second inorganic layer (399), each of the two end portions (C) being **characterised by**
having a recess (E), the recess (E) extending towards the interior of the heat-generating layer (200).

2. The heat-generating assembly according to claim 1, wherein the recess (E) extends in an extending direction of the first inorganic layer (100) or the second inorganic layer (300).

3. The heat-generating assembly according to claim 1, wherein:
the part of the recess (E) close to the interior of the heat-generating layer (200) has a smaller width than the part of the recess (E) away from the interior of the heat-generating layer (200); and
the width of the recess (E) is a dimension of the recess (E) in a thickness direction of the heat-generating layer (200).

4. The heat-generating assembly according to claim 1, wherein:
the recess (E) at least partially has a constant width; and
the width of the recess (E) is a dimension of the recess (E) in the thickness direction of the heat-generating layer (200).

5. The heat-generating assembly according to claim 1, wherein each of the two end portions (C) has a wall portion (D).

6. The heat-generating assembly according to claim 5, wherein the wall portion (D) comprises:
a first sub-wall portion (D1) connected to the first inorganic layer (100); and
a second sub-wall portion connected to the first sub-wall portion (D1), the second sub-wall portion (D2) being connected to the second inorganic layer (300),
wherein the recess (E) is formed by the first sub-wall portion (D1) and the second sub-wall portion (D2), optionally, wherein the heat-generating assembly satisfies at least one of the following conditions:
the angle formed between the first sub-wall portion (D1) and the second sub-wall portion (D2) ranges from 10 degrees to 80 degrees;
the distance by which the recess (E) extends in an extending direction of the first inorganic layer (100) is greater than 50 µm; and
the heat-generating layer (200) has a thickness ranging from 10 µm to 30 µm.

7. The heat-generating assembly according to claim 5, wherein the wall portion (D) comprises:
a first sub-wall portion (D1) connected to the first inorganic layer (100),
a second sub-wall portion (D2) connected to the second inorganic layer (300); and
a third sub-wall portion (D3) connected to the first sub-wall portion (D1) and the second sub-wall portion (D2), respectively,
wherein the recess (E) is formed by the first sub-wall portion (D1), the third sub-wall portion (D3), and the second sub-wall portion (D2).

8. The heat-generating assembly according to claim 5, wherein:
the angle formed between the plane where the wall portion (D) is located and the first inorganic layer (100) is greater or smaller than 90 degrees; and
the recess (E) is formed by the wall portion (D) and one of the first inorganic layer (100) and the second inorganic layer (300).

9. The heat-generating assembly according to claim 2, wherein:
the heat-generating layer (200) is embedded in the first inorganic layer (100) and the second inorganic layer (300); and
a contact interface between the heat-generating layer (200) and the first inorganic layer (100) and a contact interface between the heat-generating layer (200) and the second inorganic layer (300) each have a concave-convex structure.

10. The heat-generating assembly according to claim 1, wherein the heat-generating layer (200) is made of a material comprising metal particles and an inorganic oxide matrix (220).

11. The heat-generating assembly according to claim 10, wherein the metal particles satisfy at least one of the following conditions:
the metal particles are disposed close to the recess (E); and
the metal particles are disposed away from the first inorganic layer (100) and the second inorganic layer (300).

12. The heat-generating assembly according to claim 11, wherein a plurality of metal particles is aggregated to form particle aggregates (210) distributed at intervals in an extending direction of the end portion (C), optionally, wherein:
the particle aggregates (210) are of an irregular shape; and
at least a part of the particle aggregates (210) has a long axis extending in an extending direction of the first inorganic layer (100), and a short axis extending in a thickness direction of the heat-generating layer (200).

13. The heat-generating assembly according to claim 11, wherein a plurality of metal particles is aggregated to form particle aggregates (210) distributed at intervals in an extending direction of the end portion (C), and wherein:
the particle aggregates (210) are arranged away from the first inorganic layer (100) and the second inorganic layer (300); and
a spacing is formed between the particle aggregates (210) and each of the first inorganic layer (100) and the second inorganic layer (300), the inorganic oxide matrix (220) being distributed in the spacing, or, wherein a plurality of particle aggregates (210) is arranged at intervals in a thickness direction of the heat-generating layer (200), a spacing being formed between adjacent particle aggregates (210), and the inorganic oxide matrix (220) being distributed in the spacing.

14. The heat-generating assembly according to claim 13, wherein:
a bottom (E1) of the recess (E) is located close to the inorganic oxide matrix (220); and
the bottom (E1) of the recess (E) is a position where a distance between the end portion (C) and the interior of the heat-generating layer (200) is minimal.

15. A cooking device comprising a cooking appliance (IH), the cooking appliance (IH) comprising:
a container body; and
a container base connected to the container body to define an accommodation space, the container base comprising the heat-generating assembly according to any one of claims 1 to 14, optionally, wherein the cooking appliance (IH) is a kettle, an electromagnetic microcrystal pot, an electric rice cooker, or a stewpot.

## Patentansprüche

1. Wärmeerzeugungsanordnung, umfassend eine erste anorganische Schicht (100), eine Wärmeerzeugungsschicht (200) und eine zweite anorganische Schicht (300), die in Folge gestapelt sind, wobei die Wärmeerzeugungsschicht (200) Folgendes umfasst:
einen ersten Seitenabschnitt (A), der mit einer Oberfläche der ersten anorganischen Schicht (100) verbunden ist,
einen zweiten Seitenabschnitt (B), der mit einer Oberfläche der zweiten anorganischen Schicht (300) verbunden ist, und
zwei Endabschnitte (C), die einander gegenüberliegen, wobei jeder der zwei Endabschnitte (C) mit der ersten anorganischen Schicht (100) und der zweiten anorganischen Schicht (399) verbunden ist, wobei jeder der zwei Endabschnitte (C) **dadurch gekennzeichnet ist, dass**
er eine Auskehlung (E) aufweist, wobei sich die Auskehlung (E) hin zum Inneren der Wärmeerzeugungsschicht (200) erstreckt.

2. Wärmeerzeugungsanordnung nach Anspruch 1, wobei sich die Auskehlung (200) in einer Erstreckungsrichtung der ersten anorganischen Schicht (100) oder der zweiten anorganischen Schicht (300) erstreckt.

3. Wärmeerzeugungsanordnung nach Anspruch 1, wobei:
der Teil der Auskehlung (E) nahe dem Inneren der Wärmeerzeugungsschicht (200) eine geringere Breite als der Teil der Auskehlung (E) fern dem Inneren der Wärmeerzeugungsschicht (200) aufweist und
die Breite der Auskehlung (E) eine Abmessung der Auskehlung (E) in einer Dickenrichtung der Wärmeerzeugungsschicht (200) ist.

4. Wärmeerzeugungsanordnung nach Anspruch 1, wobei:
die Auskehlung (E) zumindest teilweise eine konstante Breite aufweist und
die Breite der Auskehlung (E) eine Abmessung der Auskehlung (E) in der Dickenrichtung der Wärmeerzeugungsschicht (200) ist.

5. Wärmeerzeugungsanordnung nach Anspruch 1, wobei jeder der zwei Endabschnitte (C) einen Wandabschnitt (D) aufweist.

6. Wärmeerzeugungsanordnung nach Anspruch 5, wobei der Wandabschnitt (D) Folgendes umfasst:
einen ersten Wandteilabschnitt (D1), der mit der ersten anorganischen Schicht (100) verbunden ist, und
einen zweiten Wandteilabschnitt, der mit dem ersten Wandteilabschnitt (D1) verbunden ist, wobei der zweite Wandteilabschnitt (D2) mit der zweiten anorganischen Schicht (300) verbunden ist,
wobei die Auskehlung (E) durch den ersten Wandteilabschnitt (D1) und den zweiten Wandteilabschnitt (D2) gebildet ist, wobei die Wärmeerzeugungsanordnung optional mindestens eine der folgenden Bedingungen erfüllt:
der Winkel, der zwischen dem ersten Wandteilabschnitt (D1) und dem zweiten Wandteilabschnitt (D2) gebildet ist, liegt im Bereich von 10 Grad bis 80 Grad,
die Distanz, über die sich die Auskehlung (E) in einer Erstreckungsrichtung der ersten anorganischen Schicht (100) erstreckt, ist größer als 50 µm und
die Wärmeerzeugungsschicht (200) weist eine Dicke im Bereich von 10 µm bis 30 µm auf.

7. Wärmeerzeugungsanordnung nach Anspruch 5, wobei der Wandabschnitt (D) Folgendes umfasst:
einen ersten Wandteilabschnitt (D1), der mit der ersten anorganischen Schicht (100) verbunden ist,
einen zweiten Wandteilabschnitt (D2), der mit der zweiten anorganischen Schicht (300) verbunden ist, und
einen dritten Wandteilabschnitt (D3), der mit dem ersten Wandteilabschnitt (D1) beziehungsweise dem zweiten Wandteilabschnitt (D2) verbunden ist,
wobei die Auskehlung (E) durch den ersten Wandteilabschnitt (D1), den dritten Wandteilabschnitt (D3) und den zweiten Wandteilabschnitt (D2) gebildet ist.

8. Wärmeerzeugungsanordnung nach Anspruch 5, wobei:
der Winkel, der zwischen der Ebene, in der sich der Wandabschnitt (D) befindet, und der ersten anorganischen Schicht (100) gebildet ist, größer oder kleiner als 90 Grad ist und
die Auskehlung (E) durch den Wandabschnitt (D) und entweder die erste anorganische Schicht (100) oder die zweite anorganische Schicht (300) gebildet ist.

9. Wärmeerzeugungsanordnung nach Anspruch 2, wobei:
die Wärmeerzeugungsschicht (200) in die erste anorganische Schicht (100) und die zweite anorganische Schicht (300) eingebettet ist und
eine Kontaktfläche zwischen der Wärmeerzeugungsschicht (200) und der ersten anorganischen Schicht (100) und eine Kontaktfläche zwischen der Wärmeerzeugungsschicht (200) und der zweiten anorganischen Schicht (300) jeweils eine konkave/konvexe Struktur aufweisen.

10. Wärmeerzeugungsanordnung nach Anspruch 1, wobei die Wärmeerzeugungsschicht (200) aus einem Material besteht, das Metallpartikel und eine Matrix (220) aus anorganischem Oxid umfasst.

11. Wärmeerzeugungsanordnung nach Anspruch 10, wobei die Metallpartikel mindestens eine der folgenden Bedingungen erfüllen:
die Metallpartikel sind nahe der Auskehlung (E) angeordnet und
die Metallpartikel sind fern der ersten anorganischen Schicht (100) und der zweiten anorganischen Schicht (300) angeordnet.

12. Wärmeerzeugungsanordnung nach Anspruch 11, wobei eine Vielzahl von Metallpartikeln angesammelt ist, um Partikelaggregate (210) zu bilden, die in Intervallen in einer Erstreckungsrichtung des Endabschnitts (C) verteilt sind, wobei optional:
die Partikelaggregate (210) von unregelmäßiger Form sind und
mindestens ein Teil der Partikelaggregate (210) eine lange Achse, die sich in einer Erstreckungsrichtung der ersten anorganischen Schicht (100) erstreckt, und eine kurze Achse, die sich in einer Dickenrichtung der Wärmeerzeugungsschicht (200) erstreckt, aufweist.

13. Wärmeerzeugungsanordnung nach Anspruch 11, wobei eine Vielzahl von Metallpartikeln angesammelt ist, um Partikelaggregate (210) zu bilden, die in Intervallen in einer Erstreckungsrichtung des Endabschnitts (C) angeordnet sind, und wobei:
die Partikelaggregate (210) fern der ersten anorganischen Schicht (100) und der zweiten anorganischen Schicht (300) verteilt sind und
zwischen den Partikelaggregaten (210) und jeweils der ersten anorganischen Schicht (100) und der zweiten anorganischen Schicht (300) ein Zwischenraum gebildet ist, wobei die Matrix (220) aus anorganischem Oxid in dem Zwischenraum verteilt ist oder wobei eine Vielzahl von Partikelaggregaten (210) in Intervallen in einer Dickenrichtung der Wärmeerzeugungsschicht (200) angeordnet ist, wobei zwischen benachbarten Partikelaggregaten (210) ein Zwischenraum gebildet ist und die Matrix (220) aus anorganischem Oxid in dem Zwischenraum verteilt ist.

14. Wärmeerzeugungsanordnung nach Anspruch 13, wobei:
sich ein Boden (E1) der Auskehlung (E) nahe der Matrix (220) aus anorganischem Oxid befindet und
der Boden (E1) der Auskehlung (E) eine Position ist, bei der eine Distanz zwischen dem Endabschnitt (C) und dem Inneren der Wärmeerzeugungsschicht (200) minimal ist.

15. Kochvorrichtung, umfassend ein Kochgerät (IH), wobei das Kochgerät (IH) Folgendes umfasst:
einen Behälterkörper und
eine Behälterbasis, die mit dem Behälterkörper verbunden ist, um einen Aufbewahrungsraum zu definieren, wobei die Behälterbasis die Wärmeerzeugungsanordnung nach einem der Ansprüche 1 bis 14 umfasst, wobei das Kochgerät (IH) optional ein Wasserkocher, ein elektromagnetischer Mikrokristalltopf, ein elektrischer Reiskocher oder ein Schmortopf ist.

## Revendications

1. Ensemble de génération de chaleur, comportant une première couche inorganique (100), une couche de génération de chaleur (200), et une deuxième couche inorganique (300) qui sont empilées de manière séquentielle, la couche de génération de chaleur (200) comportant :
une première partie latérale (A) raccordée à une surface de la première couche inorganique (100) ;
une deuxième partie latérale (B) raccordée à une surface de la deuxième couche inorganique (300) ; et
deux parties d'extrémité (C) à l'opposé l'une de l'autre, chacune des deux parties d'extrémité (C) étant raccordée à la première couche inorganique (100) et à la deuxième couche inorganique (399), les deux parties d'extrémité (C) étant chacune **caractérisées en ce qu'**elles ont un évidement (E), l'évidement (E) s'étendant vers la partie intérieure de la couche de génération de chaleur (200).

2. Ensemble de génération de chaleur selon la revendication 1, dans lequel l'évidement (E) s'étend dans une direction allant dans le sens de l'extension de la première couche inorganique (100) ou de la deuxième couche inorganique (300).

3. Ensemble de génération de chaleur selon la revendication 1, dans lequel :
la partie de l'évidement (E) à proximité de la partie intérieure de la couche de génération de chaleur (200) a une largeur inférieure par rapport à la partie de l'évidement (E) se trouvant à distance de la partie intérieure de la couche de génération de chaleur (200) ; et
la largeur de l'évidement (E) est une dimension de l'évidement (E) dans une direction allant dans le sens de l'épaisseur de la couche de génération de chaleur (200).

4. Ensemble de génération de chaleur selon la revendication 1, dans lequel :
l'évidement (E) a au moins partiellement une largeur constante ; et
la largeur de l'évidement (E) est une dimension de l'évidement (E) dans la direction allant dans le sens de l'épaisseur de la couche de génération de chaleur (200).

5. Ensemble de génération de chaleur selon la revendication 1, dans lequel chacune des deux parties d'extrémité (C) a une partie de paroi (D).

6. Ensemble de génération de chaleur selon la revendication 5, dans lequel la partie de paroi (D) comporte :
une première sous-partie de paroi (D1) raccordée à la première couche inorganique (100) ; et
une deuxième sous-partie de paroi raccordée à la première sous-partie de paroi (D1), la deuxième sous-partie de paroi (D2) étant raccordée à la deuxième couche inorganique (300),
dans lequel l'évidement (E) est formé par la première sous-partie de paroi (D1) et la deuxième sous-partie de paroi (D2), éventuellement, dans lequel l'ensemble de génération de chaleur satisfait à au moins l'une des conditions suivantes :
l'angle formé entre la première sous-partie de paroi (D1) et la deuxième sous-partie de paroi (D2) va de 10 degrés à 80 degrés ;
la distance sur laquelle l'évidement (E) s'étend dans une direction allant dans le sens de l'extension de la première couche inorganique (100) est supérieure à 50 µm ; et
la couche de génération de chaleur (200) a une épaisseur allant de 10 µm à 30 µm.

7. Ensemble de génération de chaleur selon la revendication 5, dans lequel la partie de paroi (D) comporte :
une première sous-partie de paroi (D1) raccordée à la première couche inorganique (100),
une deuxième sous-partie de paroi (D2) raccordée à la deuxième couche inorganique (300) ; et
une troisième sous-partie de paroi (D3) raccordée à la première sous-partie de paroi (D1) et à la deuxième sous-partie de paroi (D2), respectivement,
dans lequel l'évidement (E) est formé par la première sous-partie de paroi (D1), la troisième sous-partie de paroi (D3), et la deuxième sous-partie de paroi (D2).

8. Ensemble de génération de chaleur selon la revendication 5, dans lequel :
l'angle formé entre le plan où la partie de paroi (D) est située et la première couche inorganique (100) est supérieur ou inférieur à 90 degrés ; et
l'évidement (E) est formé par la partie de paroi (D) et l'une parmi la première couche inorganique (100) et la deuxième couche inorganique (300).

9. Ensemble de génération de chaleur selon la revendication 2, dans lequel :
la couche de génération de chaleur (200) est intégrée dans la première couche inorganique (100) et la deuxième couche inorganique (300) ; et
une interface de contact entre la couche de génération de chaleur (200) et la première couche inorganique (100) et une interface de contact entre la couche de génération de chaleur (200) et la deuxième couche inorganique (300) ont chacune une structure concave-convexe.

10. Ensemble de génération de chaleur selon la revendication 1, dans lequel la couche de génération de chaleur (200) est réalisée à partir d'un matériau comportant des particules métalliques et une matrice d'oxyde inorganique (220).

11. Ensemble de génération de chaleur selon la revendication 10, dans lequel les particules métalliques satisfont à au moins l'une des conditions suivantes :
les particules métalliques sont disposées à proximité de l'évidement (E) ; et
les particules métalliques sont disposées à distance de la première couche inorganique (100) et de la deuxième couche inorganique (300).

12. Ensemble de génération de chaleur selon la revendication 11, dans lequel une pluralité de particules métalliques est agrégée pour former des agrégats de particules (210) répartis selon des intervalles dans une direction allant dans le sens de l'extension de la partie d'extrémité (C), éventuellement, dans lequel :
les agrégats de particules (210) sont d'une forme irrégulière ; et
au moins une partie des agrégats de particules (210) a un axe long s'étendant dans une direction allant dans le sens de l'extension de la première couche inorganique (100), et un axe court s'étendant dans une direction allant dans le sens de l'épaisseur de la couche de génération de chaleur (200).

13. Ensemble de génération de chaleur selon la revendication 11, dans lequel une pluralité de particules métalliques est agrégée pour former des agrégats de particules (210) répartis selon des intervalles dans une direction allant dans le sens de l'extension de la partie d'extrémité (C), et dans lequel :
les agrégats de particules (210) sont agencés à distance de la première couche inorganique (100) et de la deuxième couche inorganique (300) ; et
un espacement est formé entre les agrégats de particules (210) et chacune de la première couche inorganique (100) et de la deuxième couche inorganique (300), la matrice d'oxyde inorganique (220) étant répartie dans l'espacement, ou, dans lequel une pluralité d'agrégats de particules (210) est agencée selon des intervalles dans une direction allant dans le sens de l'épaisseur de la couche de génération de chaleur (200), un espacement étant formé entre des agrégats de particules adjacents (210), et la matrice d'oxyde inorganique (220) étant répartie dans l'espacement.

14. Ensemble de génération de chaleur selon la revendication 13, dans lequel :
un fond (E1) de l'évidement (E) est situé à proximité de la matrice d'oxyde inorganique (220) ; et
le fond (E1) de l'évidement (E) est une position où la distance entre la partie d'extrémité (C) et la partie intérieure de la couche de génération de chaleur (200) est minimale.

15. Dispositif de cuisson comportant un appareil de cuisson (IH), l'appareil de cuisson (IH) comportant :
un corps de contenant ; et
une base de contenant raccordée au corps de contenant pour définir un espace de réception, la base de contenant comportant l'ensemble de génération de chaleur selon l'une quelconque des revendications 1 à 14, éventuellement, dans lequel l'appareil de cuisson (IH) est une bouilloire, une marmite à microcristal électromagnétique, un cuiseur à riz électrique, ou une cocotte.
